# EUROPEAN PATENT APPLICATION

(11) **EP 4 697 574 A1**
(43) Date of publication of application: **18.02.2026**
(21) Application number: 24858760.2
(22) Date of filing: 30.08.2024
(51) Int. Cl.: H02K 41/02, H02K 1/12, B65G 54/02

(54) **BENDING STATOR MODULE AND MAGNETICALLY-DRIVEN CONVEYING SYSTEM**

(30) Priority: 01.09.2023 CN 202311122438
(71) Applicant: Shanghai Golytec Automation Co., Ltd., Shanghai 201100 (CN)
(72) Inventor: CHI, Feng, Shanghai 201100 (CN); GUO, Lin, Shanghai 201100 (CN); CHEN, Zenghui, Shanghai 201100 (CN)
(74) Representative: Huang, Liwei
(86) International application number: PCT/CN2024/116074
(87) International publication number: WO 2025/045231

(57) **Abstract**

A curved stator module and a magnetic drive conveying system are disclosed. The curved stator module includes a curved stator which includes a curved stator body and a curved armature winding arranged on the curved stator body. The curved armature winding includes an avoidance portion and an arc-shaped curved portion. The avoidance portion includes a first end, a second end, and a first inner side surface and a first outer side surface located between the first end and the second end. The arc-shaped curved portion includes a second inner side surface and a second outer side surface. The first end is used to be spliced with a linear armature winding of a linear stator module. The first inner side surface is connected to the second inner side surface. The second end is used to be spliced with the arc-shaped curved portion. The first inner side surface obliquely extends from the first end towards a direction close to the second end and a direction close to the first outer side surface. This ensures that a larger distance can always be maintained between a third groove wall of a mover and the first outer side surface of the curved armature winding, preventing damage to the curved armature winding caused by a collision between the third groove wall and the first inner side surface.

## Description

### CROSS-REFERENCE TO RELATED APPLICATIONS

This application claims priority to Patent Application No. 202311122438.2, entitled "CURVED STATOR MODULE AND MAGNETICA DRIVE CONVEYING SYSTEM", filed with the China National Intellectual Property Administration on September 01, 2023.

### TECHNICAL FIELD

The present disclosure relates to the technical field of magnetic drive, in particular to a curved stator module and a magnetic drive conveying system.

### BACKGROUND

In a magnetic drive conveying system driven by magnetic force, an arc-shaped curved stator module is typically arranged at a bend of a conveying device, allowing a mover to change its direction through the curved stator module.

However, the mover, when turning by the curved stator module, is prone to motion interference with a curved armature winding of the curved stator module, leading to collisions and damage to the curved armature winding.

### SUMMARY

The present disclosure provides a curved stator module and a magnetic drive conveying system, ensuring that a larger distance can always be maintained between a third groove wall of a mover and a first outer side surface of a curved armature winding, thereby preventing damage to the curved armature winding caused by a collision between the third groove wall and a first inner side surface.

In a first aspect, the present disclosure provides a curved stator module, configured for driving a mover to move in an extension direction of the curved stator module. The curved stator module includes a curved stator. The curved stator includes: a curved stator body; and a curved armature winding, arranged on the curved stator body. The curved armature winding includes an avoidance portion and an arc-shaped curved portion, and the avoidance portion and the arc-shaped curved portion are arranged in an extension direction of the curved armature winding. The avoidance portion includes a first end, a second end, and a first inner side surface and a first outer side surface located between the first end and the second end. The arc-shaped curved portion includes a second inner side surface and a second outer side surface. The first end is used to be spliced with a linear armature winding of a linear stator module, the first inner side surface is connected to the second inner side surface, and the second end is used to be spliced with the arc-shaped curved portion. An arc-shaped contour of the second inner side surface has a first center. The first inner side surface obliquely extends from the first end towards a direction close to the second end and a direction close to the first outer side surface, enabling a distance between the first inner side surface and the first center to gradually increase in a width direction of the first end.

In a second aspect, the present disclosure further provides a magnetic drive conveying system, including a mover, a linear stator module, and the curved stator module. The curved stator module is spliced with the linear stator module to form a conveying device, and the conveying device is used for driving the mover to move in an extension direction of the conveying device. The linear stator module includes a linear stator and a linear guide rail. The linear stator includes a linear stator body and a linear armature winding. The linear stator body is spliced with the curved stator body. The linear armature winding is spliced with the avoidance portion of the curved armature winding. The linear guide rail is spliced with a curved guide rail.

In a third aspect, the present disclosure further provides a magnetic drive conveying system, including a mover, a linear stator module and the curved stator module. The curved stator module is spliced with the linear stator module to form a conveying device, and the conveying device is configured for driving the mover to move in an extension direction of the conveying device. The linear stator module includes a linear stator and a linear guide rail. The linear stator includes a linear stator body and a linear armature winding. The linear stator body is spliced with the curved armature body. The linear armature winding is spliced with the avoidance portion of the curved armature winding. The linear guide rial is spliced with a curved guide rail.

The beneficial effects of the present disclosure are as follows: by arranging the avoidance portion, when splicing the curved armature winding with the linear armature winding, the avoidance portion is located between the arc-shaped curved portion and the linear armature winding. The avoidance portion can provide a transition between the arc-shaped curved portion and the linear armature winding, enabling the splicing of the arc-shaped curved portion with the linear armature winding. The first inner side surface of the avoidance portion obliquely extends from the first end towards the direction close to the second end and the direction close to the first outer side surface, which causes the first inner side surface to retract from the first end towards the direction close to the second end, and gradually increases the distance between the first inner side surface and the first center of the second inner side surface in the width direction of the first end. This allows the mover to have a transition buffering process when moving along the avoidance portion. As the mover moves along the avoidance portion and the bending curvature of the mover increases, a larger distance can always be maintained between the third groove wall and the first outer side surface, thereby preventing damage to the curved armature winding caused by a collision between the third groove wall and the first inner side surface.

### BRIEF DESCRIPTION OF THE DRAWINGS

To more clearly illustrate the technical solutions in the embodiments of the present disclosure or the related art, the drawings used for describing the embodiments of the present disclosure or the related art will be briefly introduced below. Obviously, the drawings in the following description merely illustrate some embodiments of the present disclosure. Those skilled in the art may obtain other drawings according to these drawings without creative effort.
FIG. 1 is a schematic structural diagram of a curved stator module, from a first perspective, according to an embodiment of the present disclosure.
FIG. 2 is a schematic structural diagram of the curved stator module, from a second perspective, according to an embodiment of the present disclosure.
FIG. 3 is a schematic structural diagram of the curved stator module, from a third perspective, according to an embodiment of the present disclosure.
FIG. 4 is a schematic structural diagram of a curved stator module and a linear stator module, from a third perspective, in the related art.
FIG. 5 is a schematic structural diagram of the curved stator module and a linear stator module, from a third perspective, according to an embodiment of the present disclosure.
FIG. 6 is a schematic diagram of coil arrangement according to an embodiment of the present disclosure.
FIG. 7 is a schematic diagram of coil arrangement according to another embodiment of the present disclosure.
FIG. 8 is a schematic structural diagram of a mover and the curved stator module according to an embodiment of the present disclosure.
FIG. 9 is a schematic structural diagram of the mover and the curved stator module, from a fourth perspective, according to an embodiment of the present disclosure.
FIG. 10 is a schematic structural diagram of the curved stator module, from a third perspective, according to an embodiment of the present disclosure.
FIG. 11 is a schematic structural diagram of a curved stator module, from a third perspective, according to another embodiment of the present disclosure.
FIGS. 12-16 are schematic diagrams of a movement process of rollers sequentially passing through a first linear section, an arc-shaped conveying section and a second linear section according to an embodiment of the present disclosure.
FIG. 17 is a schematic structural diagram of a magnetic drive conveying system according to an embodiment of the present disclosure.
FIG. 18 is a schematic structural diagram of a mover according to an embodiment of the present disclosure.

### Reference numerals in drawings:

10, curved stator module; 20, curved stator; 21, stator body; 22, curved armature winding; 221, avoidance portion; 221a, first end; 221b, second end; 221c, first inner side surface; 221d, first outer side surface; 222, arc-shaped curved portion; 222a, second inner side surface; 222b, second outer side surface; 223, coupling surface; 224, coupling end; 225, connecting end; 226, coil; 23, curved guide rail; 231, arc-shaped conveying section; 231a, arc-shaped inner side surface; 231b, arc-shaped outer side surface; 231b1, first outer arc surface; 231b2, second outer arc surface; 231b3, third outer arc surface; 232, first linear section; 233, second linear section; 30, mover; 31, first roller; 32, second roller; 33, third roller; 34, fourth roller; 35, base; 351, accommodating groove; 351a, first groove wall; 351b, second groove wall; 351c, third groove wall; 352, notch; 36, permanent magnet; 40, linear stator module; 41, linear stator; 411, linear armature winding; 412, linear guide rail; 51, first connecting line; 52, second connecting line.

### DETAILED DESCRIPTION OF THE EMBODIMENTS

To make the objectives, technical solutions and advantages of the present disclosure clearer, the present disclosure is described in further detail below in conjunction with accompanying drawings and embodiments. It should be understood that the specific embodiments described herein are merely used for explaining the present disclosure rather than limiting the present disclosure.

The present disclosure provides a curved stator module and a magnetic drive conveying system to solve the problem that in the related art where a mover, when turning by a curved stator module, is prone to motion interference with a curved armature winding of the curved stator module, leading to collisions and damage to the curved armature winding.

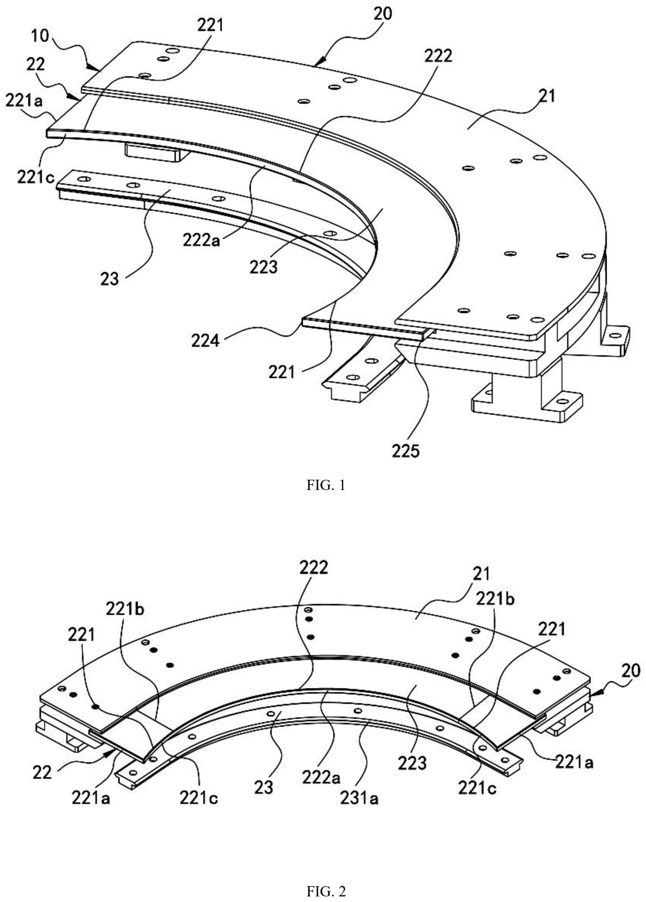

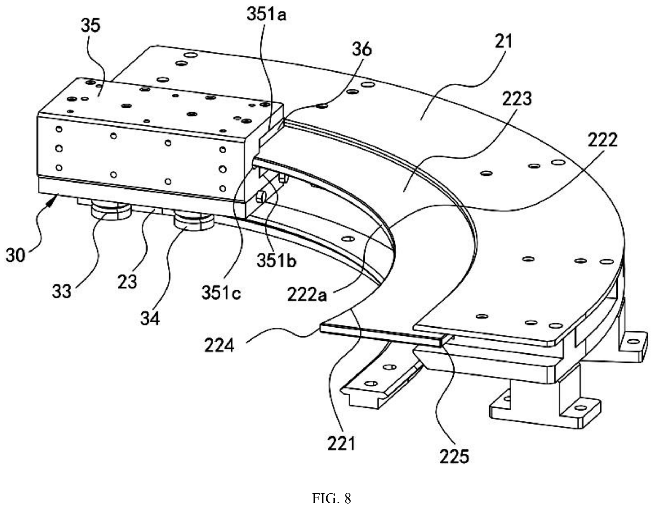

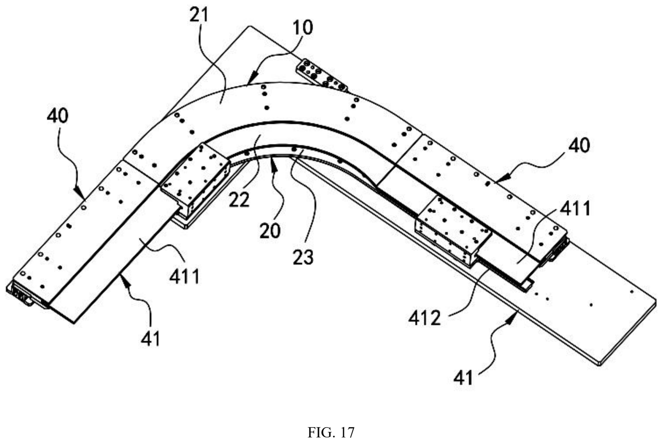

In a first aspect, the present disclosure provides a curved stator module 10. As shown in FIGS. 1 and 2, the curved stator module 10 is configured for driving a mover 30 (as shown in FIG. 8) to move in an extension direction of the curved stator module 10. The curved stator module 10 may be spliced with a linear stator module 40 (as shown in FIG. 17) in a magnetic drive conveying system and is arranged at a bend of the magnetic drive conveying system. When the mover 30 moves along the magnetic drive conveying system to the curved stator module 10, the curved stator module 10 enables the mover 30 to change its direction in the conveying process. It is understandable that the mover 30 is a device in the magnetic drive conveying system that is used to carry an item to be conveyed. The mover 30 is a magnetic drive mover. During operation, the mover 30 may be placed on the curved stator module 10, and the curved stator module 10 may provide magnetic force for the mover 30 to drive the mover 30 to move in the extension direction of the curved stator module 10.

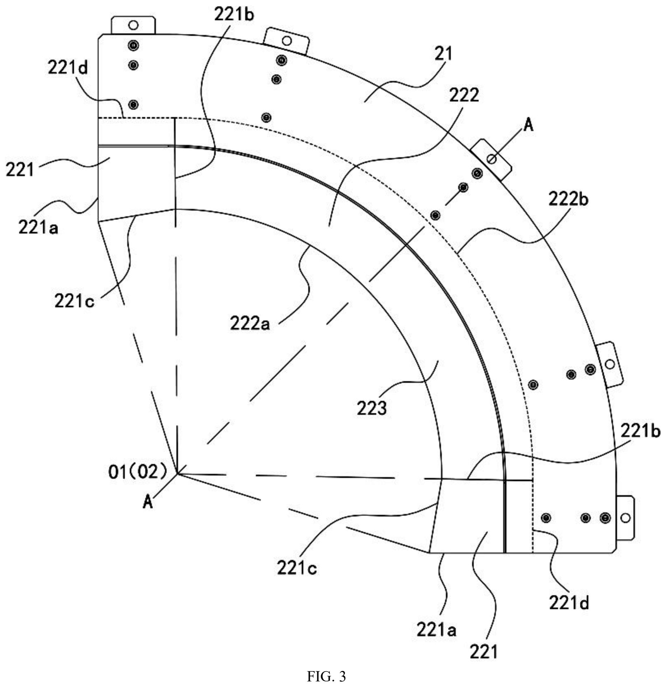

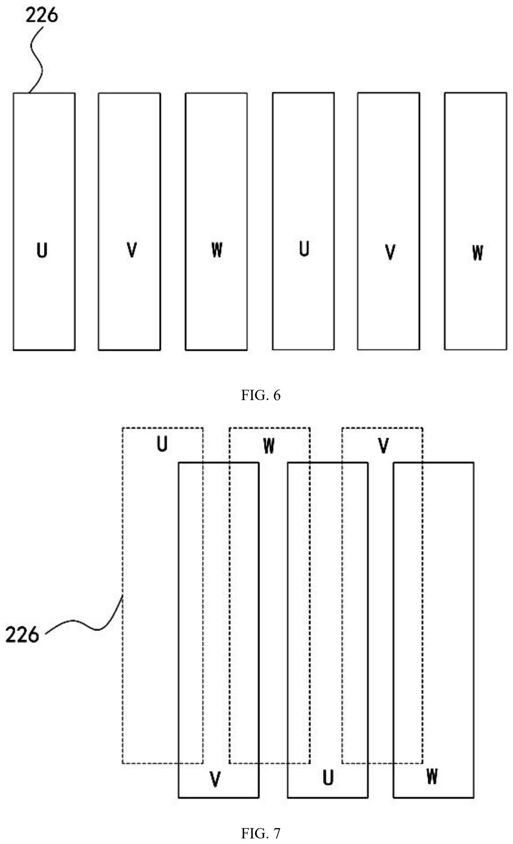

Specifically, as shown in FIGS. 2 and 3, the curved stator module 10 includes a curved stator 20. The curved stator 20 includes a stator body 21 and a curved armature winding 22, and the curved armature winding 22 is arranged on the stator body 21. It is understandable that the stator body 21 is configured to provide support for the curved armature winding 22. The curved armature winding 22 is provided with coils 226 (as shown in FIG. 6). The coils 226 generate magnetic fields when energized, and a permanent magnet 36 (as shown in FIG. 8) on the mover 30 generates a driving force under the excitation of a current in the coils 226, pushing the entire mover 30 to move in the extension direction of the curved stator module 10, thereby achieving the transportation of the item to be conveyed. The specific working principle of magnetic drive has been disclosed in the related art and thus will not be repeated in the present disclosure.

More specifically, the curved armature winding 22 includes an avoidance portion 221 and an arc-shaped curved portion 222. The avoidance portion 221 and the arc-shaped curved portion 222 are arranged in an extension direction of the curved armature winding 22. The avoidance portion 221 includes a first end 221a, a second end 221b, and a first inner side surface 221c and a first outer side surface 221d located between the first end 221a and the second end 221b. The arc-shaped curved portion 222 includes a second inner side surface 222a and a second outer side surface 222b. The first end 221a is used to be spliced with a linear armature winding 411 of the linear stator module 40. The first inner side surface 221c is connected to the second inner side surface 222a. The second end 221b is used to be spliced with the arc-shaped curved portion 222.

An arc-shaped contour of the second inner side surface 222a has a first center O1. The first inner side surface 221c obliquely extends from the first end 221a towards a direction closed to the second end 221b and a direction close to the first outer side surface 221d, enabling the distance between the first inner side surface 221c and the first center O1 to gradually increase in a width direction of the first end 221a.

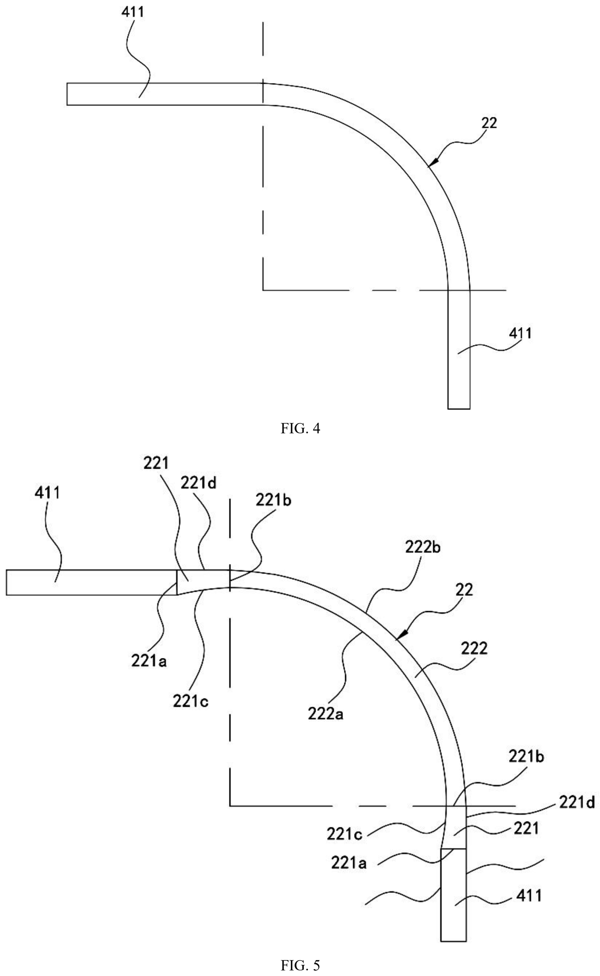

It is understandable that as shown in FIG. 8, when the mover 30 moves along the curved armature winding 22, a third groove wall 351c (as shown in FIG. 8) of the mover 30 is positioned opposite to inner side surfaceof the curved armature winding 22. In the related art, the entire arc-shaped curved armature winding 22 is directly spliced with a linear armature winding 411 (as shown in FIG. 4). To facilitate the splicing of the curved armature winding 22 with the linear armature winding 411, two ends of the inner side surface of the curved armature winding 22 are generally designed to extend linearly in a direction that is the same or similar to the extension direction of the linear armature winding 411. Taking perspective shown in FIG. 8 as an example, as the mover 30 moves rightwards in the vicinity of one end of the curved armature winding 22 and the bending curvature of the mover 30 increases, a distance between a right end of the third groove wall 351c and the inner side surface of the curved armature winding 22 deceases, which leads to motion interference and collision between the third groove wall 351c and the curved armature winding 22, thereby causing damage to the curved armature winding 22.

In the present disclosure, by arranging the avoidance portion 221, as shown in FIG. 5, when splicing the curved armature winding 22 with the linear armature winding 411, the avoidance portion 221 is located between the arc-shaped curved portion 222 and the linear armature winding 411. The avoidance portion 221 can provide a transition between the arc-shaped curved portion 222 and the linear armature winding 411, enabling the splicing of the arc-shaped curved portion 222 with the linear armature winding 411. The first inner side surface 221c of the avoidance portion 221 obliquely extends from the first end 221a towards a direction close to the second end 221b and a direction close to the first outer side surface 221b, which causes the first inner side surface 221c to "retract" from the first end 221a towards the direction close to the second end 221b, and gradually increases the distance between the first inner side surface 221c and the first center O1 of the second inner side surface 222a in the width direction of the first end 221a. This provides a transition buffering process for the mover 30 when moving along the avoidance portion 221. Taking the perspective shown in FIG. 8 as an example, as the mover 30 moves rightwards along the avoidance portion 221 and the bending curvature of the mover 30 increases, a larger distance can always be maintained between the third groove wall 351c and the first outer side surface 221d, thereby preventing damage to the curved armature winding 22 caused by a collision between the third groove wall 351c and the first inner side surface 221c.

As shown in FIG. 3, in an embodiment, the first inner side surface 221c may be an inclined plane, so that it extends the first end 221a towards the direction close to the second end 221b, the distance between the first inner side surface 221c and the first center O1 of the second inner side surface 222a in the width direction of the first end 221a consistently increases. This ensures that a larger distance can always be maintained between the third groove wall 351c and the first outer side surface 221d even as the bending curvature of the mover 30 increases.

As shown in FIG. 5, in other embodiments, the first inner side surface 221c is a recessed curved surface, making the transition process of the mover 30 moving along a transition portion is smoother and more stable. Further, the contour of the first inner side surface 221c may completely or incompletely coincide with a circle where the arc-shaped contour of the second inner side surface 222a is located, that is, in a plane perpendicular to the axis of the second inner side surface 222a, a projection of the first inner side surface 221c can completely or incompletely coincide with a projection of the second inner side surface 222a. Definitely, in other embodiments, the first inner side surface 221c may be in other shapes such as a sawtooth shape or a wavy shape.

Further referring to FIG. 3, in some embodiments of the present disclosure, the width of the avoidance portion 221 decreases gradually in the direction from the first end 221a to the second end 221b. It should be noted that the width of the avoidance portion 221 refers to the distance between the first inner side surface 221c and the first outer side surface 221d. In the embodiments of the present disclosure, the width of the avoidance portion 221 decreases gradually, allowing the first inner side surface 221c to be designed to obliquely extend from the first end 221a towards the direction close to the second end 221b and the direction close to the first outer side surface 221d without changing the shape of the first outer side surface 221d. Additionally, the width of the second end 221b may be smaller than that of the first end 221a, thereby reducing the width of the arc-shaped curved portion 222 that is spliced with the second end 221b. As can be seen by comparing FIGS. 4 and 5, this allows the radius of the second inner side surface 222a of the arc-shaped curved portion 222 to be increased while keeping the position of the first center O1 of the second inner side surface 222a unchanged, thereby increasing the length of the arc-shaped contour of the second inner side surface 222a, enabling the arc-shaped curved portion 222 to accommodate a longer mover 30 for turning, and further improving the universality of the curved armature winding 22.

In some embodiments of the present disclosure, the width of the first end 221a is equal to that of the linear armature winding 411 that is spliced with the avoidance portion 221, alternatively or additionally, the width of the arc-shaped curved portion 222 is equal to that of the second end 221b, making the splicing of the avoidance portion 221 with the linear armature winding 411 and the splicing of the avoidance portion 221 with the arc-shaped curved portion 222 more convenient and smooth. The width of the arc-shaped curved portion 222 refers to the distance between the second inner side surface 222a and the second outer side surface 222b. It should also be noted that only the width of the first end 221 is equal to that of the linear armature winding 411 that is spliced with the avoidance portion 221; or only the width of the arc-shaped curved portion 222 is equal to that of the second end 221b. Alternatively, the width of the first end 221a can be equal to that of the linear armature winding 411 that is spliced with the avoidance portion 221, and the width of the arc-shaped curved portion 222 can be equal to that of the second end 221b.

Further referring to FIG. 3, in some embodiments of the present disclosure, the first outer side surface 221d is connected to the second outer side surface 222b. When the linear armature winding 411 is spliced with the transition portion, the first outer side surface 221d is connected to an outer side surface of the linear armature winding 411, which ensures that no step structure is formed at a splicing point between the transition portion and the linear armature winding 411 due to misalignment, and no step structure is formed at a splicing point between the transition portion and the arc-shaped curved portion 222 due to misalignment. This results in a more uniform distribution of magnetic fields formed by the coils 226 on the curved armature winding 22.

In some embodiments of the present disclosure, two avoidance portions 221 are arranged and respectively located at two ends of the arc-shaped curved portion 222. It is understandable that in the presence of only one avoidance portion 221, the first end 221a of the avoidance portion 221 can be spliced with one linear guide rail, and the second end 221b of the avoidance portion 221 can be spliced with a first end of the arc-shaped curved portion 222, and the first end of the arc-shaped curved portion 222 can be spliced with another linear guide rail; and in the presence of two avoidance portions 221, the two avoidance portions 221 can be respectively spliced with two linear guide rails.

Further referring to FIG. 3, in some embodiments of the present disclosure, the arc-shaped contour of the second outer side surface 22b has a second center O2, the first center O1 coincides with the second center O2, that is, in a plane perpendicular to the axis of the second inner side surface 222a and the axis of the second outer side surface 222b, the center of a projection of the second inner side surface 222a coincides with the center of a projection of the second outer side surface 222b. This makes a circle where the arc-shaped contour of the second inner side surface 222a is located and a circle where the arc-shaped contour of the second outer side surface 222b is located concentric, ensuring that the arc-shaped curved portion 222 has a uniform width. As a result, the shape of arc-shaped curved portion 222 is more regular, and its overall stress distribution is more uniform. Moreover, machining and manufacturing are convenient, and the production cost can be reduced.

Further referring to FIG. 3, in some embodiments of the present disclosure, the stator body 21 has a symmetry axis AA, the first center O1 and the second center O2 are both located along an extended path of the symmetry axis AA, and the curved armature winding 22 is symmetrically arranged about the symmetry axis AA. It is understandable that the curved armature winding 22 and the stator body 21 are both of axisymmetric structures which are symmetric about the symmetry axis AA, ensuring that the overall stress distribution of the stator body 21 and the curved armature winding 22 is more uniform. Moreover, machining and manufacturing are convenient, and the production cost can be reduced.

As shown in FIGS. 6 and 7, in some embodiments of the present disclosure, the curved stator 20 includes a plurality of coil windings, and the plurality of coil windings are arranged in the extension direction of the curved armature winding 22. It is understandable that the plurality of coil windings are periodically energized to enable the curved armature winding 22 to generate varying magnetic fields at different positions. These magnetic fields are configured to couple with the permanent magnet 36 on the mover 30, thereby driving the mover 30 to move along the curved stator module 10.

The avoidance portion 221 and the arc-shaped curved portion 222 are both provided with coil windings, ensuring that the mover 30 receives electromagnetic driving forces provided by the coil windings when moving along the avoidance portion 221 and the arc-shaped curved portion 222. This makes the direction-changing process of the mover 30 more stable, easier to control and higher precise in movement.

As shown in FIG. 6, in an embodiment of the present disclosure, each coil winding includes a U-phase coil, a V-phase coil and a W-phase coil which are sequentially arranged in the extension direction of the curved armature winding 22. It is understandable that the U-phase coil, the V-phase coil and the W-phase coil in each coil winding are arranged in the same layer, the U-phase coil, the V-phase coil and the W-phase coil are different types of coils 226 within the coil winding, and the U-phase coil, the V-phase coil and the W-phase coil may form a three-phase coil winding.

The avoidance portion 221 and the arc-shaped curved portion 222 may be integrally formed. The curved stator 20 may further include a circuit board, and all the coil windings are arranged on the circuit board to improve the connection strength between the avoidance portion 221 and the arc-shaped curved portion 222, and to reduce the number of circuit boards, thereby saving cost. The circuit board may be a single-sided board, a double-sided board or a multi-layer board. The circuit board may be a printed circuit board. The coils 226 in the coil windings may be formed on the circuit board through printing.

In other embodiments, the curved stator 20 may further include a first circuit board located on the avoidance portion 221 and a second circuit board located on the arc-shaped curved portion 222, the coil windings of the avoidance portion 221 are located on the first circuit board, and the coil windings of the arc-shaped curved portion 222 are located on the second circuit board. It is understandable that locating the coil windings of the avoidance portion 221 and the coil windings of the arc-shaped curved portion 222 on the first circuit board and the second circuit board separately can prevent mutual interference between the coil windings of the avoidance portion 221 and the coil windings of the arc-shaped curved portion 222. It should also be noted that in this embodiment, the avoidance portion 221 and the arc-shaped curved portion 222 may be integrally formed, or may be separately formed and then spliced together. The first circuit board and the second circuit may be electrically connected through pins, adapter boards, socket connections, wires, or other electrical connection modes.

As shown in FIG. 7, in another embodiment of the present disclosure, a first coil winding and a second coil winding among the plurality of coil windings are arranged adjacent to each other. The first coil winding includes a first U-phase coil, a first V-phase coil and a first W-phase coil. The second coil winding includes a second U-phase coil, a second V-phase coil and a second W-phase coil.

The first U-phase coil, the first W-phase coil and the second V-phase coil are located in the same layer and arranged in sequence, and the first V-phase coil, the second U-phase coil and the second W-phase coil are located in the same layer and arranged in sequence. It should be noted that the first coil winding and the second coil winding are located on different layers, and the first coil winding may be located in a layer above or below the second coil winding.

As shown in FIG. 8, in some embodiments of the present disclosure, the curved armature winding 22 has a coupling surface 223 which is arranged opposite to the permanent magnet 36 of the mover 30. The coupling surface 223 is located between the inner side surface of the curved armature winding 22 and an outer side surface of the curved armature winding 22.

The coupling surface 223 may be arranged horizontally, that is, the coupling surface 223 is parallel to the horizontal plane. It should be noted that compared to the related art where the coupling surface 223 is arranged vertically, which restricts the mover 30 to turn only on the outer circumference of the curved armature winding 22, limiting the diversity of conveying paths of the curved stator module 10, in the embodiments of the present disclosure, by arranging the coupling surface 223 of the curved armature winding 22 horizontally, the mover 30 can turn on the outer circumference of the curved armature winding 22 along a first arc surface or can also turn on the outer circumference along a second arc surface of the curved armature winding 22. This improves the diversity of the conveying paths of the curved stator module 10. Definitely, in other embodiments, the coupling surface 223 may also be arranged vertically.

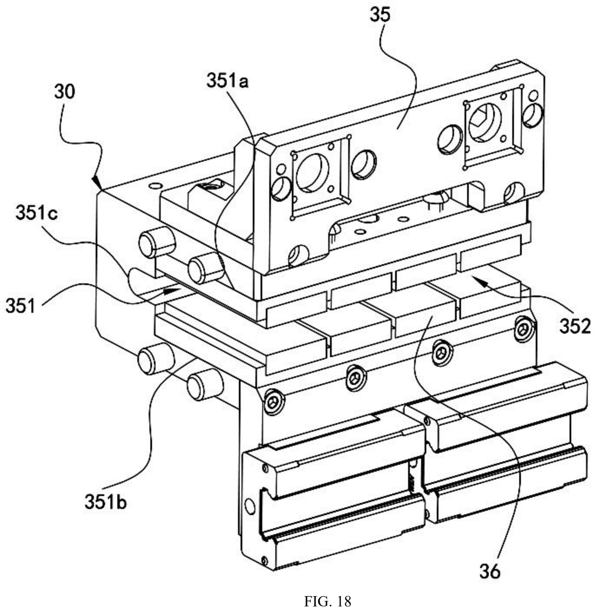

Further referring to FIG. 8, in some embodiments of the present disclosure, the curved armature winding 22 has a coupling end 224 for coupling with the permanent magnet 36 of the mover 30 and a connecting end 225 for connecting with the curved stator 20 body. The coupling end 224 has the first inner side surface 221c and the second inner side surface 222a, and the connecting end 225 has the first outer side surface 221d and the second outer side surface 222b. It is understandable that the connecting end 225 of the curved armature winding 22 is connected to the stator body 21. When the curved armature winding 22 drives the mover 30, the coupling end 224 is inserted into an accommodating groove 351 of the mover 30 that holds the permanent magnet 36 (as shown in FIG. 18) and couples with the permanent magnet 36. This allows the mover 30 to turn along the inner circumference of the coupling end 224, improving the diversity of conveying paths of the curved stator module 10.

As shown in FIGS. 8-10, in some embodiments of the present disclosure, the curved stator module 10 further includes a curved guide rail 23, the curved guide rail 23 is arranged on one side of the curved armature winding 22 and connected to the curved stator 20 body, an extension direction of the curved guide rail 23 is the same as the that of the curved armature winding 22, and the curved guide rail 23 is configured for rollers of the mover 30 to roll. It is understandable that the curved guide rail 23 is configured to provide limiting guidance for the mover 30, and the rollers of the mover 30 can roll along the curved guide rail 23, ensuring that the mover 30 moves stably along the curved stator module 10 under the drive of the curved armature winding 22.

It should also be noted that in the presence of the curved guide rail 23, the curved stator module 10 may control the movement trajectory of the mover 30 in two ways. The first way is to control the movement trajectory of the mover 30 through a power input provided to the mover 30 by the curved armature winding 22. The second way is to control the movement trajectory of the mover 30 using the guidance of the curved guide rail 23. Therefore, in theory, the shape of the curved guide rail 23 may be designed to prevent the mover 30 from colliding with the curved armature winding 22 during turning. However, the curved guide rail 23 is generally a non-standard part, making it difficult and costly to manufacture. A curved guide rail 23 of a specific width can only accommodate a mover 30 of a specific length, resulting in poor university. In the present disclosure, by designing the curved armature winding 22 to prevent the mover 30 from colliding with the curved armature winding 22 during turning, it is possible to avoid changing the width and position of the curved guide rail 23. The curved armature winding 22 may accommodate the movers 30 of various specifications, thereby improving the universality of the curved stator module 10.

In an embodiment of the present disclosure, the coupling surface 223 and the curved guide rail 23 are arranged horizontally, and the curved guide rail 23 is located below the curved armature winding 22. Alternatively, the coupling surface 223 and the curved guide rail 23 are arranged horizontally, and the curved guide rail 23 is located above or below the stator body 21. Alternatively, the coupling surface 223 and the curved guide rail 23 are arranged vertically, and the curved guide rail 23 is located at the connecting end 225.

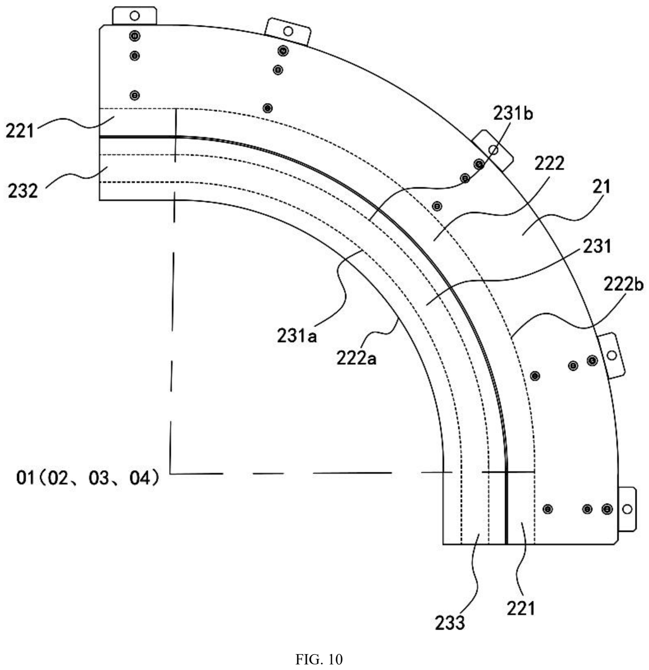

Further referring to FIG. 10, in some embodiments of the present disclosure, the curved guide rail 23 includes an arc-shaped conveying section 231, and the arc-shaped conveying section 231 is positioned opposite to the arc-shaped curved portion 222. The arc-shaped conveying section 231 has an arc-shaped inner side surface 231a and an arc-shaped outer side surface 231b.

In an embodiment, the arc-shaped contour of the arc-shaped inner side surface 231a has a third center O3, and the arc-shaped contour of the arc-shaped outer side surface 231b has a fourth center O4. The first center O1, the second center O2, the third center O3 and the fourth center O4 all coincide. It is understandable that in this embodiment, the curvature of the arc-shaped conveying section 231 is the same throughout. The arc-shaped contour of the arc-shaped inner side surface 231a is a part of one circle, and the arc-shaped contour of the arc-shaped outer side surface 231b is a part of another circle. The circle where the arc-shaped contour of the second inner side surface 222a is located, the circle where the arc-shaped contour of the second outer side surface 222b is located, the circle where the arc-shaped contour of the arc-shaped inner side surface 231a is located and the circle where the arc-shaped contour of the arc-shaped outer side surface 231b is located are concentric circles. This ensures that the distance between the arc-shaped outer side surface 231b and the arc-shaped inner side surface 231a is the same throughout, that is, the width of the arc-shaped conveying section 231 is uniform, allowing the rollers to turn more smoothly along the arc-shaped conveying section 231.

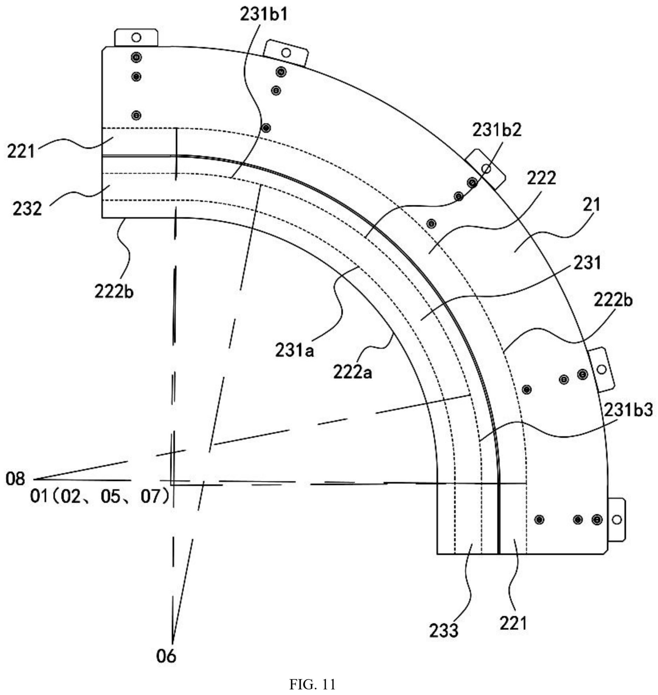

As shown in FIG. 11, in another embodiment, the arc-shaped contour of the arc-shaped inner side surface 231a has a fifth center O5. The arc-shaped outer side surface 231b includes a first outer arc surface 231b1, a second outer arc surface 231b2 and a third outer arc surface 231b3 which are sequentially arranged and connected in the extension direction of the curved guide rail 23. The arc-shaped contour of the first outer arc surface 231b1 has a center O6, the arc-shaped contour of the second outer arc surface 231b2 has a seventh center O7, and the arc-shaped contour of the third outer arc surface 231b3 has an eighth center O8. The fifth center O5 and the seventh center O7 coincide with the first center O1 and the second center O2, and the sixth center O6 and the eighth center O8 are offset from the first center O1. It is understandable that in this embodiment, a circle where the arc-shaped contour of the first outer arc surface 231b1 is located, a circle where the arc-shaped contour of the second outer arc surface 231b2 is located and a circle where the arc-shaped contour of the third outer arc surface 231b3 is located are non-concentric circles. This makes the distance between the first outer arc surface 231b1 and the arc-shaped inner side surface 231a, the distance between the third outer arc surface 231b3 and the arc-shaped inner side surface 231a and the distance between the second outer arc surface 231b2 and the arc-shaped inner side surface 231a different.

In an embodiment, the first outer arc surface 231b1 is tangent to the second outer arc surface 231b2, and the third outer arc surface 231b3 is tangent to the second outer arc surface 231b2, ensuring that the rollers turn more smoothly along the first outer arc surface 231b1, the second outer arc surface 231b2 and the third outer arc surface 231b3.

It should also be noted that in other embodiments, only the first arc-shaped outer side surface 231 b1 may be tangent to the second arc-shaped outer side surface 231b2; or only the third arc-shaped outer side surface 231b3 may be tangent to the second arc-shaped outer side surface 231b2.

Specifically, further referring to FIGS. 10 and 11, the curved guide rail 23 further includes a first linear section 232 and a second linear section 233. The first linear section 232, the arc-shaped conveying section 231 and the second linear section 233 are sequentially arranged and connected in the extension direction of the curved guide rail 23. The first linear section 232 or/and the second linear section 233 are positioned opposite to the avoidance section 221, and the first linear section 232 and the second linear section 233 are used to be respectively spliced with the linear guide rail 412 of the linear stator module 40 (as shown in FIG. 17). It should be noted that when the curved armature winding 22 includes one avoidance portion 221, one of the first linear section 232 and the second linear section 233 is positioned opposite to the avoidance portion 221; and when the curved armature winding 22 includes two avoidance portion 221, the first linear section 232 and the second linear section 233 are positioned opposite to the two avoidance portions 221 respectively.

In one embodiment of the present disclosure, an inner side surface of the first linear section 232 is a plane tangent to the arc-shaped inner side surface 231, and an inner side surface of the second linear section 233 is a plane tangent to the arc-shaped inner side surface 231a, an outer side surface of the first linear section 232 is a plane tangent to the first outer arc surface 231b1, and an outer side surface of the second linear section 233 is a plane tangent to the third outer arc surface 231b3.

It is understandable that the first linear section 232 and the second linear section 233 both extend linearly, and the extension direction of the linear guide rail 412 spliced with the curved guide rail 23 depends on the extension direction of the curved guide rail 23. More specifically, in the presence of the first linear section 232, the extension direction of the linear guide rail 412 spliced with the first linear section 232 is the same as an extension direction of the first linear section 232; and in the presence of the second linear section 233, the extension direction of the linear guide rail 412 spliced with the first linear section 232 is the same as that of the first linear section 232. The rollers may still continue the linear conveying state along the first linear section 232 and the second linear section 233, allowing the mover 30 to continue the linear conveying state along the first linear section 232 and the second linear section 233. The entire turning and direction-changing process of the mover 30 occurs in the arc-shaped conveying section 231, allowing the turning and direction-changing process of the mover 30 to be completed within the curved stator module 10. The mover 30 does not need to pass through the splicing point between the curved guide rail 23 and the linear guide rail 412 during the turning and direction-changing process, making the direction-changing process of the mover 30 more stable, easier to control and higher precise in movement.

It should also be noted that in other embodiments, only the inner side surface of the first linear section 232 may be a plane tangent to the arc-shaped inner side surface 231a. In other embodiments, only the inner side surface of the second linear section 233 may be a plane tangent to the arc-shaped inner side surface 231a. In other embodiments, the inner side surface of the first linear section 232 may be a plane tangent to the arc-shaped inner side surface 231a, and the inner side surface of the second linear section 233 may also be a plane tangent to the arc-shaped inner side surface 231a. In other embodiments, only the outer side surface of the first linear section 232 may be a plane tangent to the arc-shaped inner side surface 231a. In other embodiments, only the outer side surface of the second linear section 233 may be a plane tangent to the third outer arc side surface 231b3. In other embodiments, the outer side surface of the first linear section may be a plane tangent to the first outer arc surface 231b1, and the outer side surface of the second linear section 233 may also be a plane tangent to the third outer arc surface 232b3. In other embodiments, the inner side surface of the first linear section 232 may be a plane tangent to the arc-shaped inner side surface 231a, and the outer side surface of the first linear section 232 may be a plane tangent to the first outer arc surface 231b. In other embodiments, the inner side surface of the first linear line 232 may be a plane tangent to the arc-shaped inner side surface 231a, and the outer side surface of the second linear section 233 may be a plane tangent to the third outer arc surface 231b3. In other embodiments, the outer side surface of the first linear section 232 may be a plane tangent to the first outer arc surface 231b1, and the inner side surface of the second linear section 233 may be a plane tangent to the arc-shaped inner side surface 231a. In other embodiments, the inner side surface of the second linear section 233 may be a plane tangent to the arc-shaped inner side surface 231a, and the outer side surface of the second linear section 233 may be a plane tangent to the third arc-shaped outer side surface 231b3. In other embodiments, the inner side surface of the first linear section 232 may be a plane tangent to the arc-shaped inner side surface 231a, the inner side surface of the second linear section 233 may be a plane tangent to the arc-shaped inner side surface 231a, and the outer side surface of the first linear section 232 may be a plane tangent to the first arc-shaped outer side surface 231b1. In other embodiments, the inner side surface of the first linear section 232 may be a plane tangent to the arc-shaped inner side surface 231a, the inner side surface of the second linear section 233 may be a plane tangent to the arc-shaped inner side surface 231a, and the outer side surface of the second linear section 233 may be a plane tangent to the third outer arc surface 231b3. In other embodiments, the inner side surface of the first linear section 232 may be a plane tangent to the arc-shaped inner side surface 231a, the outer side surface of the first linear section 232 may be a plane tangent to the first outer arc surface 231b1, and the outer side surface of the second linear section 233 may be a plane tangent to the third outer arc surface 231b3. In other embodiments, the inner side surface of the second linear section 233 may be a plane tangent to the arc-shaped inner side surface 231a, the outer side surface of the first linear section 232 may be a plane tangent to the first outer arc surface 231b1, and the outer side surface of the second linear section 233 may be a plane tangent to the third outer arc surface 231b3.

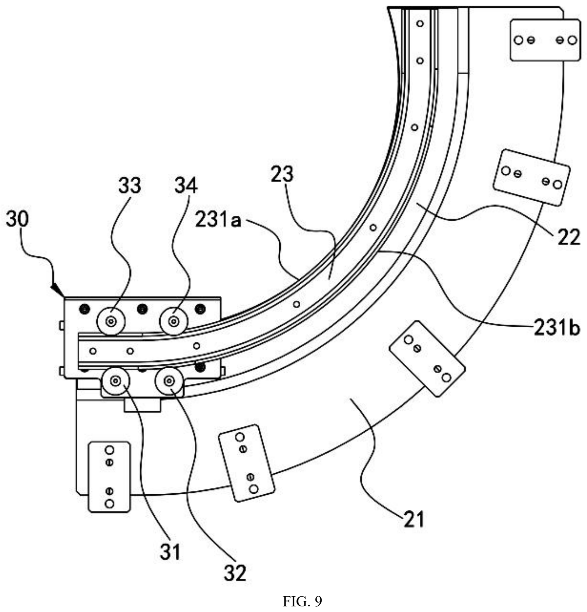

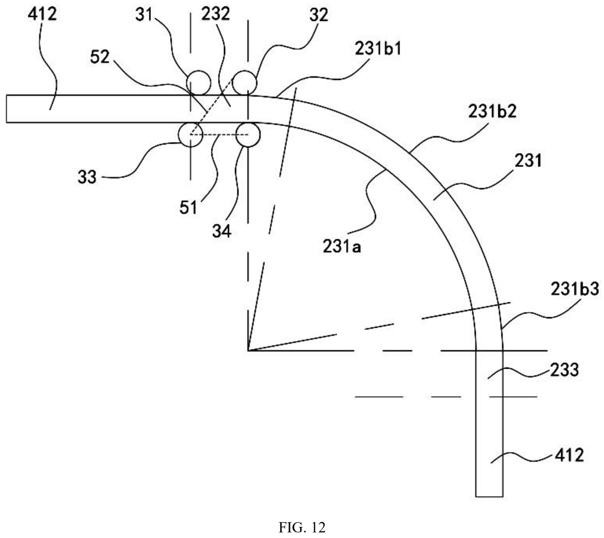

As shown in FIGS. 9 and 12, in some embodiments of the present disclosure, the mover 30 includes a first roller 31, a second roller 32, a third roller 33 and a fourth roller 34. The first roller 31 and the second roller 32 are arranged on an outer side of the curved guide rail 23 and spaced apart from each other in the extension direction of the curved guide rail 23. The third roller 33 and the fourth roller 34 are arranged on an inner side of the curved guide rail 23 and spaced apart from each other in the extension direction of the curved guide rail 23.

The distance between the first roller 31 and the second roller 32 is smaller than the distance between the third roller 33 and the fourth roller 34. It is understandable that the third roller 33 and the fourth roller 34 are configured to roll along the arc-shaped inner side surface 231a of the curved guide rial 23. Since the curvature of the arc-shaped contour of the arc-shaped inner side surface 231a is uniform throughout, the third roller 33 and the fourth roller 34 can always remain in contact with the arc-shaped inner side surface 231a. The first roller 31 and the second roller 32 are configured to roll along the arc-shaped outer side surface 231b of the curved guide rail 23. By setting the distance between the first roller 31 and the second roller 32 to be small, it can be ensured that at least one of the first roller 31 and the second roller 32 remains in contact with the arc-shaped outer side surface 231b while rolling along the first outer arc surface 231b1, the second outer arc surface 231b2 and the third outer arc surface 231b3. This ensures that at least three rollers are in contact with the curved guide rail 23, forming a stable triangular structure. Additionally, the larger distance between the third roller 33 and the fourth roller 34 allows the formation of a more stable acute triangle by three rollers, making the movement of the mover 30 along the curved guide rail 23 more stable and smooth.

It should also be noted that in other embodiments of the present disclosure, the number of rollers may be one, two, three, five or others. All the rollers may be located on the inner side or the outer side of the curved guide rail 23. When the rollers are arranged on both the inner side and the outer side of the curved guide rail 23, the number of rollers on the inner side of the curved guide rail 23 may be the same as or different from the number of rollers on the outer side of the curved guide rail 23. For example, the number of rollers on the inner side of the curved guide rail 23 is two, and the number of rollers on the outer side of the curved guide rail 23 is one.

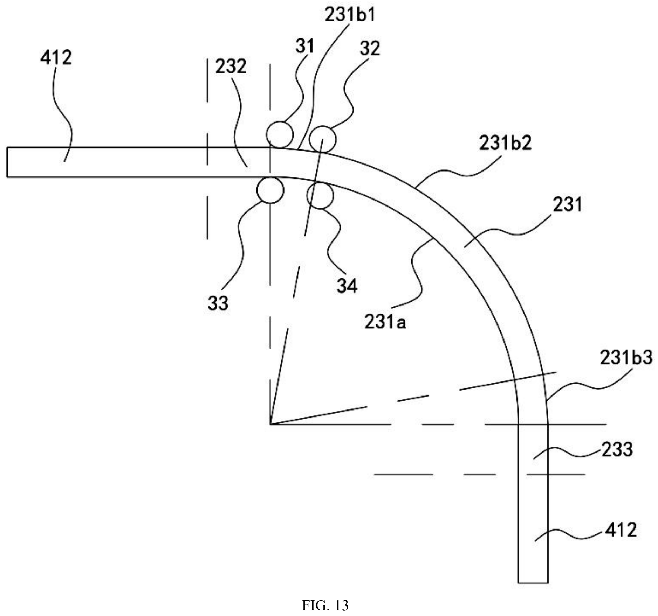

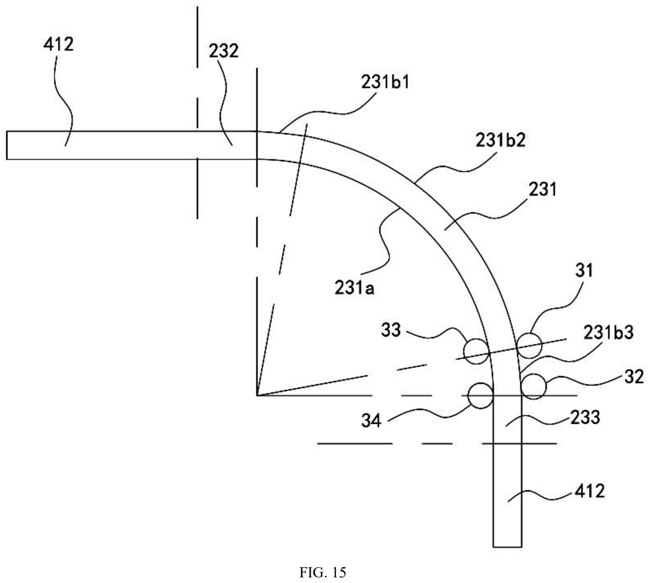

As shown in FIGS. 12-16, these figures illustrate a movement process of the rollers sequentially passing through the first linear section 232, the arc-shaped conveying section 231 and the second linear section 233.

As shown in FIG. 12, in an embodiment of the present disclosure, the inner side surface of the first linear section 232 and the first arc-shaped outer side surface 231b1 have a first tangent point. When the first tangent point and the axis line of the fourth roller 34 are located in the same plane, a contact position between the third roller 33 and the curved guide rail 23 is at a connection between the first linear section 232 and the linear guide rail 412. This ensures that one of the third roller 33 and the fourth roller 34 remains in contact with the inner side surface of the first linear section 232 when the mover 30 moves along the first linear section 232, improving the stability of the mover 30 as it moves along the first linear section 232.

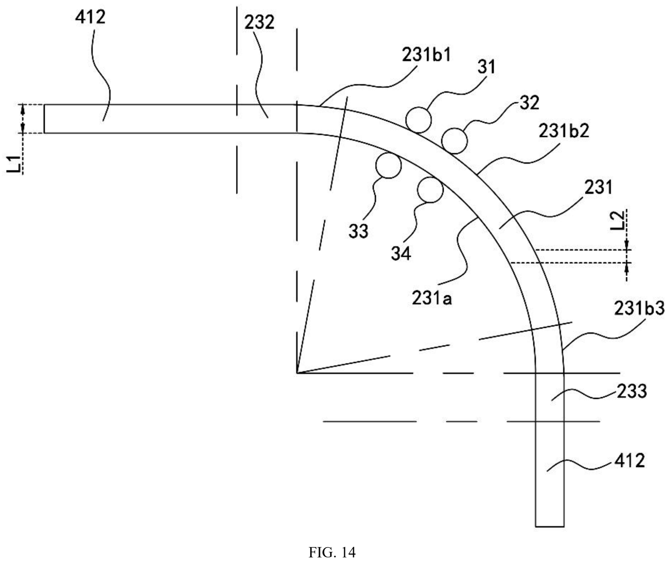

As shown in FIG. 14, when the first roller 31 and the second roller 32 are both in contact with the second outer arc surface 231b2, the outer contours of the first roller 31 and the second roller 32 are tangent to the second outer arc surface 231b2, and the outer contours of the third roller 33 and the fourth roller 34 are both tangent to the arc-shaped inner surface 231a. This ensures that when the mover 30 moves along a part of the curved guide rail 23 corresponding to the second outer arc surface 231b2, the four rollers may be in contact with a part of the curved guide rail 23 corresponding to the second outer arc surface 231b2, thereby improving the stability of the mover 30 during turning.

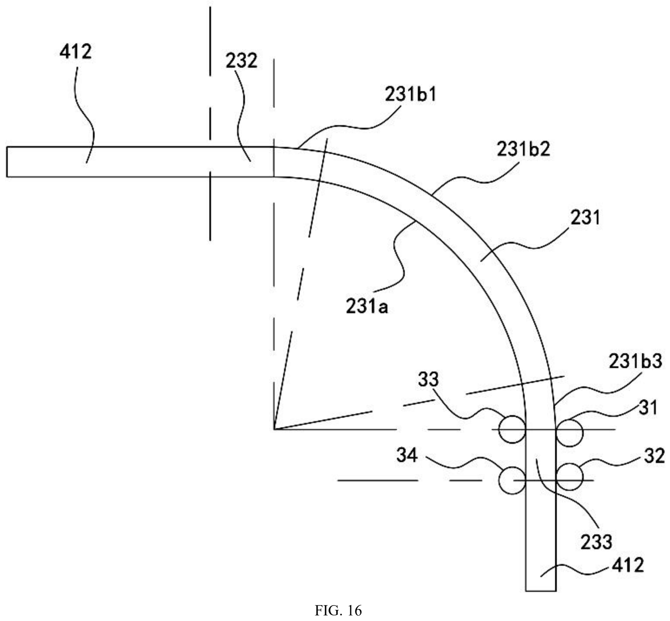

As shown in FIG. 16, the inner side surface of the second linear section 233 and the third outer arc surface 231b3 have a second tangent point. When the second tangent point and the axis line of the third roller 33 are located in the same plane, a contact position between the fourth roller 34 and the curved guide rail 23 is at a connection between the second linear section 233 and the linear guide rail 412. This ensures that when the mover 30 moves along the second linear section 233, one of the third roller 33 and the fourth roller 34 remains in contact with the inner side surface of the second linear section 233, improving the stability of the mover 30 as it moves along the second linear section 233.

In an embodiment of the present disclosure, as shown in FIG. 12, a first connecting line 51 passes through the axis lines of the third roller 33 and the fourth roller 34, an angle formed between a second connecting line 52 and the first connecting line 51 is 40°, and the second connecting line 52 is tangent to the outer contour of the second roller 32.

In an embodiment of the present disclosure, the distance between the first roller 31 and the second roller 32 may be 40 mm-60 mm, preferably 55 mm. Definitely, the distance between the first roller 31 and the second roller 32 may also be other values, such as 40 mm, 45 mm, 50 mm or 60 mm. The distance between the third roller 33 and the fourth roller 34 may be 60.1 mm-70 mm, preferably 64.24 mm. Definitely, the distance between the third roller 33 and the fourth roller 34 may also be other values, such as 60.1 mm, 62 mm, 65 mm, 68 mm or 70 mm. The radii of the first roller 31, the second roller 32, the third roller 33 and the fourth roller 34 may be the same or different. The radii of the first roller 31, the second roller 32, the third roller 33 and the fourth roller 34 may be 30 mm-40 mm, preferably 34 mm. Definitely, the radii of the first roller 31, the second roller 32, the third roller 33 and the fourth roller 34 may also be other values, such as 30 mm, 32 mm, 35 mm, 38 mm or 40 mm.

As shown in FIG. 14, the distance between the inner side surface of the first linear section 232 and the outer side surface of the first linear section 232 and the distance between the inner side surface of the second linear section 233 and the outer side surface of the second linear section 233 are both L1, that is, the width of the first linear section 232 and the width of the second linear section 233 are both L1. The distance between the arc-shaped inner side surface 231a and the second arc-shaped outer side surface 231b2 is L2, and a portion of the curved guide rail 23 corresponding to the second outer arc surface 231b2 is defined as the width of the curved portion, which is L2.

In an embodiment, L1 > L2. It is understandable that the distance between the first roller 31 and the third roller 33 and the distance between the second roller 32 and the fourth roller 34 generally depend on the width of the linear guide rail 412 This ensures that the four rollers are all in contact with the linear guide rail 232 when the mover 30 moves along the linear guide rail 412. The width of the linear guide rail 412 spliced with the first linear section 232 is the same as that of the first linear section 232, and the width of the linear guide rail 412 spliced with the second linear section 233 is the same as that of the second linear section 233. Therefore, for example, when the mover 30 moves along the first linear section 232, the four rollers will be in contact with the first linear section 232. In this embodiment, by setting L1 > L2, it can be prevented that the rollers get stuck due to an excessively large L2 when the mover 30 moves to the part of the curved guide rail 23 corresponding to the second outer arc surface 231b2, thereby ensuring smooth movement of the mover 30. Additionally, since L1 and L2 are not equal, the outer side surface of the first linear section 232 and the outer side surface of the second linear section 233 cannot be directly tangent to the second outer arc surface 231b2. By setting the first outer arc surface 231b1 to achieve the transition between the outer side surface of the first linear section 232 and the second outer arc surface 231b2, and setting the third outer arc surface 231b3 to achieve the transition between the outer side surface of the second linear section 233 and the second outer arc surface 231b2, the movement of the mover 30 can be made smoother.

In another embodiment, L1 = L2. This ensures that when the mover 30 moves to the part of the curved guide rail 23 corresponding to the second outer arc surface 231b2, the four rollers are all in contact with the part of the curved guide rail corresponding to the second outer arc surface 231b2, making the movement of the mover 30 more stable.

In a second aspect, the present disclosure further provides a magnetic drive conveying system. As shown in FIG. 17, the magnetic drive conveying system includes a mover 30, a linear stator module 40 and the curved stator module 10 as described in any one of the embodiments mentioned above. The curved stator module 10 is spliced with the linear stator module 40 to form a conveying device. The conveying device is configured for driving the mover 30 to move in the extension direction of the conveying device.

The linear stator module 40 includes a linear stator 41. The linear stator 41 includes a linear stator body and a linear armature winding 411. The linear stator body is spliced with the curved stator 20 body. The linear armature winding 411 is spliced with the avoidance portion 221 of the curved armature winding 22.

In one embodiment of the present disclosure, the linear stator module 40 further includes a linear guide rail 412, and the linear guide rail 412 is spliced with the curved guide rail 23.

As shown in FIGS. 8 and 18, in one embodiment of the present disclosure, the mover 30 includes a base 35. The base 35 is provided with an accommodating groove 351. The accommodating groove 351 extends in a first preset direction to penetrate through two ends of the base 35. The accommodating groove 351 also extends in a second preset direction to form a notch 352 in one side of the base 35 for the linear armature winding 411 and the curved armature winding 22 to enter and exit the accommodating groove 351. The second preset direction is perpendicular to the first preset direction. The accommodating groove 351 includes a first groove wall 351a, a second groove wall 351b and a third groove wall 351c. The third groove wall 351c is arranged opposite to the notch 352. The first groove wall 351a and the second groove wall 351b are arranged opposite to each other and respectively located on two sides of the third groove wall 351c.

A permanent magnet 36 is arranged on the first groove wall 351a or/and the second groove wall 351b. When the mover 30 is located on the linear stator module 40, the permanent magnet 36 is positioned opposite to the linear armature winding 411. When the mover 30 is located on the curved stator module 10, the permanent magnet 36 is positioned opposite to the curved armature winding 22.

It should be noted that the permanent magnet 36 may be only arranged on the first groove wall 351a or the second groove wall 351b. Alternatively, the permanent magnets 36 may be arranged on both the first groove wall 351a and the second groove wall 351b. Taking the curved armature winding 22 as an example, when the coupling end 224 of the curved armature winding 22 is inserted into the accommodating groove 351 through the notch 352, the coupling surface 223 of the curved armature winding 22 is positioned opposite to the permanent magnet 36, and the coupling end 224 of the curved armature winding 22 is positioned opposite to the third groove wall 351c. When the curved armature winding 22 has only one coupling surface 223, the permanent magnet 36 is only arranged on the first groove wall 351a or the second groove wall 351b. When the curved armature winding 22 has two coupling surfaces 223, the permanent magnets 36 are arranged on both the first groove wall 351a and the second groove wall 351b.

In an embodiment of the present disclosure, when the mover 30 is located on the linear stator module 40, a gap exists between the third groove wall 351c and the linear armature winding 411. It is understandable that the widest part of the avoidance portion 221 is at the first end 221a, and the width of the first end 221a is the same as that of the linear armature winding 411. Therefore, when the mover 30 moves to the first end 221a of the avoidance portion 221, a gap exists between the third groove wall 351a and the linear armature winding 411. This ensures that the third groove wall 351c will not collide with the linear armature winding 411 when the two ends of the mover 30 move to the first end 221a of the avoidance portion 221.

In an embodiment of the present disclosure, a first sensor is arranged on the mover 30, and second sensors are arranged on both the linear stator module 40 and the curved stator module 10. The second sensors are used in conjunction with the first sensor to detect the position of the mover 30.

The first sensor may be a magnetic grid ruler or an optical grating, and the second sensors may be read heads that can read the magnetic grid rule or optical grating. Alternatively, the first sensor is a read head that reads the magnetic grid ruler or optical grating, and the second sensors may be magnetic grid rules or optical gratings.

The above are merely preferred embodiments of the present disclosure and are not intended to limit the present disclosure. Any modifications, equivalent replacements and improvements made within the spirit and principles of the present disclosure should fall within the protection scope of the present disclosure.

## Claims

1. A curved stator module, configured for driving a mover to move in an extension direction of the curved stator module, comprising a curved stator, wherein the curved stator comprises:
a curved stator body; and
a curved armature winding, arranged on the curved stator body, the curved armature winding comprising an avoidance portion and an arc-shaped curved portion, the avoidance portion and the arc-shaped curved portion being arranged in an extension direction of the curved armature winding, the avoidance portion comprising a first end, a second end, and a first inner side surface and a first outer side surface located between the first end and the second end, the arc-shaped curved portion comprising a second inner side surface and a second outer side surface, the first end being used to be spliced with a linear armature winding of a linear stator module, the first inner side surface being connected to the second inner side surface, and the second end being used to be spliced with the arc-shaped curved portion;
wherein an arc-shaped contour of the second inner side surface has a first center, and the first inner side surface obliquely extends from the first end towards a direction close to the second end and a direction close to the first outer side surface, enabling a distance between the first inner side surface and the first center to gradually increase in a width direction of the first end.

2. The curved stator module according to claim 1, wherein the first inner side surface is an inclined plane.

3. The curved stator module according to claim 1, wherein the first inner side surface is a recessed curved surface.

4. The curved stator module according to claim 1, wherein a width of the avoidance portion decreases gradually in a direction from the first end to the second end.

5. The curved stator module according to claim 1, wherein a width of the first end is equal to a width of the linear armature winding spliced with the avoidance portion, and/or, a width of the arc-shaped curved portion is equal to a width of the second end.

6. The curved stator module according to claim 1, wherein two avoidance portions are arranged and are respectively located at two ends of the arc-shaped curved portion.

7. The curved stator module according to claim 1, wherein the arc-shaped contour of the second outer side surface has a second center, and the first center coincides with the second center.

8. The curved stator module according to claim 1, wherein the curved stator comprises a plurality of coil windings, and the plurality of coil windings are arranged in the extension direction of the curved armature winding;
wherein the avoidance portion and the arc-shaped curved portion are both provided with the coil windings.

9. The curved stator module according to claim 8, wherein each coil winding comprises a U-phase coil, a V-phase coil and a W-phase coil which are sequentially arranged in the extension direction of the curved armature winding.

10. The curved stator module according to claim 9, wherein the avoidance portion and the arc-shaped curved portion are formed integrally, the curved stator further comprises a circuit board, and all the coil windings are arranged on the circuit board.

11. The curved stator module according to claim 9, wherein the curved stator further comprises a first circuit board located on the avoidance portion and a second circuit board located on the arc-shaped curved portion, the coil windings of the avoidance portion are located on the first circuit board, and the coil windings of the arc-shaped curved portion are located on the second circuit board.

12. The curved stator module according to claim 8, wherein a first coil winding and a second coil winding of the plurality of coil windings are arranged adjacent to each other, the first coil winding comprises a first U-phase coil, a first V-phase coil and a first W-phase coil, and the second coil winding comprises a second U-phase coil, a second V-phase coil and a second W-phase coil;
wherein the first U-phase coil, the first W-phase coil and the second V-phase coil are located in the same layer and arranged in sequence, and the first V-phase coil, the second U-phase coil and the second W-phase coil are located in the same layer and arranged in sequence.

13. The curved stator module according to claim 1, wherein the curved armature winding has a coupling surface arranged opposite to a permanent magnet of the mover, the coupling surface is located between an inner side surface of the curved armature winding and an outer side surface of the curved armature winding, and the coupling surface is arranged horizontally.

14. The curved stator module according to claim 1, wherein the curved armature winding has a coupling end for coupling with a permanent magnet of the mover and a connecting end for connecting the curved stator body, the coupling end has the first inner side surface and the second inner side surface, and the connecting end has the first outer side surface and the second outer side surface.

15. The curved stator module according to claim 1, further comprising:
a curved guide rail, arranged on a side of the curved armature winding and connected to the curved stator body, wherein an extension direction of the curved guide rail is the same as the extension direction of the curved armature winding, and the curved guide rail is configured for rollers of the mover to roll.

16. The curved stator module according to claim 15, wherein the curved armature winding has a coupling surface arranged opposite to a permanent magnet of the mover, and the coupling surface is located between an inner side surface of the curved armature winding and an outer side surface of the curved armature winding; the curved armature winding also has a coupling end for coupling with the permanent magnet of the mover and a connecting end for connecting with the curved stator body, the coupling end has the first inner side surface and the second inner side surface, and the connecting end has the first outer side surface and the second outer side surface;
the coupling surface and the curved guide rail are arranged horizontally, and the curved guide rail is located below the curved armature winding; or,
the coupling surface and the curved guide rail are arranged horizontally, and the curved guide rail is located above or below the curved stator body; or
the coupling surface and the curved guide rail are arranged vertically, and the curved guide rail is located at the connecting end.

17. The curved stator module according to claim 15, wherein the curved guide rail comprises an arc-shaped conveying section, and the arc-shaped conveying section is positioned opposite to the arc-shaped curved portion and has an arc-shaped inner side surface and an arc-shaped outer side surface;
the arc-shaped contour of the second inner side surface has a first center, the arc-shaped contour of the second outer side surface has a second center, the arc-shaped contour of the arc-shaped inner side surface has a third center, the arc-shaped contour of the arc-shaped outer side surface has a fourth center, and the first center, the second center, the third center and the fourth center all coincide.

18. The curved stator module according to claim 15, wherein the curved guide rail comprises an arc-shaped conveying section, a part of the curved armature winding, corresponding to the second inner side surface and the second outer side surface is positioned opposite to the arc-shaped conveying section, and the arc-shaped conveying section has an arc-shaped inner side surface and an arc-shaped outer side surface;
the arc-shaped contour of the second inner side surface has a first center, the arc-shaped contour of the second outer side surface has a second center, the arc-shaped contour of the arc-shaped inner side surface has a fifth center, the arc-shaped outer side surface comprises a first outer arc surface, a second outer arc surface and a third outer arc surface which are sequentially arranged and connected in the extension direction of the curved guide rial, the arc-shaped contour of the first outer arc surface has a sixth center, the arc-shaped contour of the second outer arc surface has a seventh center, the arc-shaped contour of the third outer arc surface has an eighth center, the fifth center and the seventh center coincide with the first center and the second center, and the sixth center and the eighth center are offset from the first center.

19. The curved stator module according to claim 18, wherein the first outer arc surface is tangent to the second outer arc surface, or/and, the third outer arc surface is tangent to the second outer arc surface.

20. The curved stator module according to claim 18, wherein the curved guide rial further comprises a first linear section and a second linear section, the first linear section, the arc-shaped conveying section and the second linear section are sequentially arranged and connected in the extension direction of the curved guide rail, the first linear section or/and the second linear section are positioned opposite to the avoidance portion, and the first linear section and the second linear section are used to be respectively spliced with a linear guide rail of the linear stator module;
an inner side surface of the first linear section is a plane tangent to the arc-shaped inner side surface or/and an inner side surface of the second linear section is a plane tangent to the arc-shaped inner side surface; or/and
an outer side surface of the first linear section is a plane tangent to the first outer arc surface and/or an outer side surface of the second linear section is a plane tangent to the third outer arc surface.

21. The curved stator module according to claim 20, wherein the mover comprises a first roller, a second roller, a third roller and a fourth roller, the first roller and the second roller are arranged on an outer side of the curved guide rail and spaced apart from each other in the extension direction of the curved guide rail, and the third roller and the fourth roller are arranged on an inner side of the curved guide rail and spaced apart from each other in the extension direction of the curved guide rail; and
the distance between the first roller and the second roller is smaller than the distance between the third roller and the fourth roller.

22. The curved stator module according to claim 21, wherein the inner side surface of the first linear section and the first outer arc surface have a first tangent point; when the first tangent point and an axis line of the fourth roller are located in the same plane, a contact position between the third roller and the curved guide rail is at a connection between the first linear section and the linear guide rail.

23. The curved stator module according to claim 21, wherein when the first roller and the second roller are both in contact with the second outer arc surface, the outer contours of the first roller and the second roller are both tangent to the second outer arc surface, and the outer contours of the third roller and the fourth roller are both tangent to the arc-shaped inner side surface.

24. The curved stator module according to claim 21, wherein the inner side surface of the second linear section and the third outer arc surface have a second tangent point; when the second tangent point and an axis line of the third roller are located in the same plane, a contact position between the fourth roller and the curved guide rail is at a connection between the second linear section and the linear guide rail.

25. The curved stator module according to claim 21, wherein the distance between the inner side surface of the first linear section and the outer side surface of the first linear section and the distance between the inner side surface of the second linear section and the outer side surface of the second linear section are both L1, the distance between the arc-shaped inner side surface and the second outer arc surface is L2, and L1 >L2 or Ll =L2.

26. A magnetic drive conveying system, comprising a mover, a linear stator module and the curved stator module according to any one of claims 1 to 14, the curved stator module being spliced with the linear stator module to form a conveying device, and the conveying device being used for driving the mover to move in an extension direction of the conveying device;
wherein the linear stator module comprises a linear stator, the linear stator comprises a linear stator body and a linear armature winding, the linear stator body is spliced with the curved stator body, and the linear armature winding is spliced with the avoidance portion of the curved armature winding.

27. The magnetic drive conveying system according to claim 26, wherein the mover comprises a base, the base is provided with an accommodating groove, the accommodating groove extends in a first preset direction to penetrate through two ends of the base, the accommodating groove also extends in a second preset direction to form a notch in a side of the base for the linear armature winding and the curved armature winding to enter and exit the accommodating groove, and the second preset direction is perpendicular to the first preset direction; the accommodating groove comprises a first groove wall, a second groove wall and a third groove wall, the third groove wall is arranged opposite to the notch, and the first groove wall and the second groove wall are arranged opposite to each other and respectively located on two sides of the third groove wall;
a permanent magnet is arranged on the first groove wall or/and the second groove wall; when the mover is located on the linear stator module, the permanent magnet is positioned opposite to the linear armature winding; and when the mover is located on the curved stator module, the permanent magnet is positioned opposite to the curved armature winding.

28. The magnetic drive conveying system according to claim 27, wherein when the mover is located on the linear stator module, a gap exists between the third groove wall and the linear armature winding.

29. The magnetic drive conveying system according to claim 26, wherein a first sensor is arranged on the mover, second sensors are arranged on the linear stator module and the curved stator module, and the second sensors are used in conjunction with the first sensor to detect a position of the mover.

30. A magnetic drive conveying system, comprising a mover, a linear stator module and the curved stator module according to any one of claims 15 to 25, the curved stator module being spliced with the linear stator module to form a conveying device, and the conveying device being used for driving the mover to move in an extension direction of the conveying device;
wherein the linear stator module comprises a linear stator and a linear guide rail, the linear stator comprises a linear stator body and a linear armature winding, the linear stator body is spliced with the curved stator body, the linear armature winding is spliced with the avoidance portion of the curved armature winding, and the linear guide rail is spliced with the curved guide rail.

31. The magnetic drive conveying system according to claim 30, wherein the mover comprises a base, the base is provided with an accommodating groove, the accommodating groove extends in a first preset direction to penetrate through two ends of the base, the accommodating groove also extends in a second preset direction to form a notch in a side of the base for the linear armature winding and the curved armature winding to enter and exit the accommodating groove, and the second preset direction is perpendicular to the first preset direction; the accommodating groove comprises a first groove wall, a second groove wall and a third groove wall, the third groove wall is arranged opposite to the opening, and the first groove wall and the second groove wall are arranged opposite to each other and respectively located on two sides of the third groove wall;
a permanent magnet is arranged on the first groove wall or/and the second groove wall; when the mover is located on the linear stator module, the permanent magnet is positioned opposite to the linear armature winding; and when the mover is located on the curved stator module, the permanent magnet is positioned opposite to the curved armature winding.

32. The magnetic drive conveying system according to claim 31, wherein when the mover is located on the linear stator module, a gap exists between the third groove wall and the linear armature winding.

33. The magnetic drive conveying system according to claim 30, wherein a first sensor is arranged on the mover, second sensors are arranged on the linear stator module and the curved stator module, and the second sensors are used in conjunction with the first sensor to detect a position of the mover.
